# EUROPÄISCHE PATENTANMELDUNG

(11) **EP 4 498 027 A2**
(43) Veröffentlichungstag der Anmeldung: **29.01.2025**
(21) Anmeldenummer: 24213291.8
(22) Anmeldetag: 13.12.2019
(51) Int. Cl.: F28D 1/053

(54) **HEIZKÖRPER**

(30) Priorität: 10.12.2019 DE 102019133802
(62) Teilanmeldung aus: 19832863.5
(71) Anmelder: ULUDAG, Nejdet, 22767 Hamburg (DE)
(72) Erfinder: ULUDAG, Nejdet, 22767 Hamburg (DE); ÖZELSAGIROGLU, Mustafa, 34510 Esenyurt, Istanbul (TR)
(74) Vertreter: Stoffregen, Hans-Herbert

(57) **Zusammenfassung**

Die Erfindung betrifft einen Heizkörper (146, 168, 178, 210, 220), umfassend zumindest ein mit einem Arbeitsmittel (150) gefülltes Wärmerohr (148) mit einem ersten und einem zweiten Ende (152, 154) sowie eine Wärmequelle (164), die thermisch mit dem Wärmerohr (148) gekoppelt ist. Um den Wirkungsgrad zu verbessern, die Zeit der Aufheizung zu verkürzen und eine homogene Wärmeverteilung zu erreichen, ist vorgesehen, dass das Wärmerohr (148) zu einem mäanderförmigen Rohrbündel (148) gebogen ist, umfassend gerade, parallel verlaufende Abschnitte (156) und die parallelen Abschnitte verbindende obere und untere gebogene Abschnitte (158), wobei die unteren oder oberen gebogenen Abschnitte (158) des Rohrbündels (148) thermisch mit der Wärmequelle (164) gekoppelt sind.

## Beschreibung

Die Erfindung betrifft einen Heizkörper, umfassend zumindest ein mit einem Arbeitsmittel gefülltes Wärmerohr mit einem ersten und einem zweiten Ende sowie eine Wärmequelle, die thermisch mit dem Wärmerohr gekoppelt ist.

Die Erfindung betrifft auch einen Heizkörper, umfassend mehrere mit einem Arbeitsmittel gefüllte, vorzugsweise parallel oder im Wesentlichen parallel verlaufende Wärmerohre mit jeweils einem ersten Ende und einem zweiten Ende sowie eine Wärmequelle, die thermisch mit den ersten und/oder zweiten Enden der Wärmerohre gekoppelt ist.

Ein Heizkörper der eingangs genannten Art ist aus der DE 20 2007 015 734 Ul bekannt. Ein mehrteiliger Heizkörper besteht aus einer vertikal angeordneten beheizten Frontplatte und mehreren auf der Rückseite der Frontplatte wärmeleitend mit der Frontplatte verbundenen senkrecht angeordneten und zueinander beabstandeten und mit Kältemittel gefüllten, geschlossenen Hohlprofilen. Die Enden der Hohlprofile stehen einseitig aus der Frontplatte heraus und sind in einem unter der Frontplatte befindlichen vom Heizmedium durchströmten, horizontalen Trägerprofilrohr aufgenommen. Das Trägerprofilrohr umfasst mindestens einen Eintrittsstutzen und mindestens einen Austrittsstutzen sowie Öffnungen zur wärmeleitenden und formschlüssigen Aufnahme der Endungen der Hohlprofile. Die beheizte Frontplatte einschließlich der mit der Frontplatte wärmeleitend verbundenen Hohlprofile kann folglich ohne das Absperren und Entleeren des Heizmediums vom Trägerprofilrohr getrennt werden.

Bei der bekannten Ausführungsform sind die Hohlprofile als Einzelelemente und endseitig geschlossen ausgebildet.

Die EP 1 307 698 B1 betrifft ein Heizgerät, welches ein im Wesentlichen vertikales Heizungsrohr umfasst, das mit zumindest einem zusätzlichen Heizungsrohr in Verbindung steht, welches sich von diesem aus in einer im Wesentlichen horizontalen Richtung erstreckt und drehbar daran angeordnet ist. Zumindest eines der Heizungsrohre ist zumindest teilweise entleert und weist einen inneren Hohlraum zur Aufnahme einer Betriebsflüssigkeit aufweist. Ferner ist zumindest eines der Heizungsrohre geeignet, um Wärme aus einer inneren oder äußeren Wärmequelle aufzunehmen.

Für Raumheizungen mit Warmwasser als Wärmeträger sind verschiedene Heizkörper-Typen bekannt. Entsprechend ihrer Bauart und Funktion werden die Warmwasser-Heizkörper unterteilt in Konvektoren, Gliederheizkörper, Röhrenheizkörper und Plattenheizkörper.

Die zuvor genannten Warmwasser-Heizkörper unterscheiden sich im Wesentlichen durch ihre Bauart und die Art der Wärmeabgabe in Form von Strahlung und/oder Konfektion. Von entscheidender Bedeutung für das Raumklima ist die Art der Wärmeabgabe in den Raum. Je höher der Anteil der Strahlungswärme ist, umso angenehmer ist der Heizkomfort bzw. die Behaglichkeitsempfindung.

Konfektionswärme entsteht durch die Erwärmung von kalter Luft entlang von Heizkörperflächen, wodurch die Luft- und Staubzirkulation im Raum erhöht wird. Im Gegensatz dazu werden durch Strahlungswärme (Wellenlänge im Infrarotbereich) nur feste Körper, Gegenstände, Wände, Möbel und/oder jegliche Art von Masse einschließlich biologischer Masse erwärmt. Durch die IR-Strahlung werden auch Gase wie Raumluft erwärmt, jedoch wesentlich geringer als durch Konvektionswärme, was zur Folge hat, dass durch Strahlungswärme praktisch kein Staub aufgewirbelt wird.

Passiv-Konvektoren sind Heizkörper, bei denen kältere Umgebungsluft an mit Lamellen versehenen wasserführenden Kavitäten, z. B. Rohre, erwärmt wird. Durch die örtliche Erwärmung an den meist senkrechten Lamellenflächen entsteht eine zwangsweise vertikale Luftzirkulation. Die Lamellen vergrößern die Wärme abgebende Oberfläche der die Kavitäten umhüllenden Materialien. Rohre und Lamellen können aus wärmeleitfähigen Materialien ausgebildet sein.

Aktiv-Konvektoren sind Heizkörper, bei denen mittels zumindest eines Ventilators die zu erwärmende Luft an den mit Lamellen versehenen Wasser führenden Rohren zwangsweise vorbeigeführt und erwärmt wird. Rohre und Lamellen können ebenfalls aus wärmeleitfähigen Metallen ausgebildet sein. Typische Bauformen sind z. B. Heizregister.

Gliederheizkörper bestehen aus zusammengesetzten Einzelgliedern. Die Wärmeabgabe erfolgt überwiegend durch Konvektion, vorzugsweise ¾ als Konvektionswärme und ¼ als Strahlungswärme. Heizkörperglieder sind aus wärmeleitfähigen Metallen wie Stahl oder Gusseisen ausgebildet.

Röhrenheizkörper bestehen aus nebeneinander angeordneten Röhren ohne Lamellen, die an ihren Enden mit jeweils parallelen Verbindungsrohren fluiddicht verbunden sind. Die Effizienz entspricht in etwa der der Gliederheizkörper, wobei ¾ der Wärme als Konvektionswärme und ¼ der Wärme als Strahlungswärme abgegeben wird. Heizkörperglieder sind aus wärmeleitfähigen Materialien, vorwiegend aus Stahl, Kupfer und/oder Aluminium ausgebildet. Eine typische Bauform sind z. B. Handtuchhalter.

Der Plattenheizkörper ist eine Standardform unter den Heizkörpern. Er ist aus Plattenhälften verschweißt, in denen Wasserkanäle / Kavitäten vorgeformt sind. Die wasserführenden Hohlräume sind im Heizkörper flächiger gestaltet. Dadurch ist das Verhältnis von Wärmeübertragungsfläche zu Wasservolumen günstiger als bei einem Gliederheizkörper. Allerdings benötigt der Plattenheizkörper weniger Warmwasser bei gleicher Wärmeleistung als ein Gliederheizkörper, wobei der Plattenheizkörper ca. 30 % sparsamer als der Gliederheizkörper ist. Je nach Bauart strahlt der Plattenheizkörper 50 bis 70 % Strahlungswärme und 30 bis 50 % Konvektionswärme ab.

Durch parallele senkrechte Anordnung von Konvektionslamellen (Rippen) an den verschweißten Plattenkammer wird der Konvektionsanteil erhöht. Die Wärmeleistung kann durch parallele Plattenkörper, die fluiddicht verbunden sind, variiert werden.

Der Wärmeträger für die zuvor beschriebenen Heizkörper ist Warmwasser. Die Bauart bzw. der Typ bestimmt das Wasservolumen bei vergleichbarem Wärmeertrag bzw. Leistung. Die Wärmeabstrahlung insbesondere bei Plattenheizkörpern ist nicht immer gleichmäßig über die Plattenoberfläche verteilt. Sie ist unter anderem abhängig von der Art und Lage der Anschlüsse des Vor- und/oder Rücklaufs. Es wird grundsätzlich zwischen gleichseitigen, wechselseitigen, reitenden und/oder hängenden Anschlüssen unterschieden. Auch sind Sonderausführungen wie Einrohranschlüsse und Mittenanschlüsse bekannt.

Bei gleich- und/oder wechselseitigen Anschlüssen ist allgemein bekannt, dass diese Anschlusskombination keinen Einfluss auf die Wärmeleistung von Warmwasserheizkörpern ausüben. Bei reitenden und hängenden Anschlüssen muss eine Leistungsminderung bis zu 15 % berücksichtigt werden. Die Wärmeleistung von Heizkörpern wird auch wesentlich bestimmt von der Bauart, den Abmessungen, der Warmwasser-Vorlauftemperatur, dem Wasservolumenstrom und/oder der Anschlusslage des Vor- und/oder Rücklaufs. Auch unterliegen Heizkörper einer sogenannten "Wärmeträgheit".

Heizkostenverteiler zur verbrauchsabhängigen Berechnung von Heizkosten sind bei Glieder-, Röhren- oder Plattenheizkörpern an standardisierten, vorbestimmten Stellen zu positionieren. Heizkostenermittlung bei "nur" Konvektoren erfolgt durch Wärmemengenzähler im Wasserkreislauf.

Davon ausgehend liegt der vorliegenden Erfindung die Aufgabe zugrunde, Heizkörper der eingangs genannten Art derart weiter zu bilden, dass der Wirkungsgrad verbessert, die Zeit der Aufheizung verkürzt und eine homogene Wärmeverteilung erreicht wird.

Die Aufgabe wird erfindungsgemäß dadurch gelöst, dass das Wärmerohr zu einem mäanderförmigen Rohrbündel gebogen ist, umfassend gerade, parallel verlaufende Abschnitte und die parallelen Abschnitte verbindende obere und untere gebogene Abschnitte, wobei die unteren oder oberen gebogenen Abschnitte des Rohrbündels thermisch mit der Wärmequelle gekoppelt sind.

Eine besonderes bevorzugte Ausführungsform sieht vor, dass die Enden des Rohrbündels fluiddicht miteinander verbunden sind.

Zur effizienten Wärmeankopplung ist vorgesehen, dass die unteren bogenförmigen Abschnitte des Rohrbündels jeweils einen Verdampfer bilden und thermisch mit einem Wärmeleit-Korpus gekoppelt sind, wobei der Wärmeleit-Korpus mit der Wärmequelle thermisch gekoppelt ist.

Der Wärmeleit-Korpus ist vorzugsweise aus einem wärmeleitenden Material, wie Kupfer oder Aluminium, ausgebildet.

Vorzugsweise ist das Rohrbündel ein Gravitationswärmerohr-Bündel.

Die Wärmequelle kann ein den Wärmeleit-Korpus durchsetzendes und von einem Heizmedium, wie Wasser, durchflossenes Heizungsrohr sein.

Alternativ kann die Wärmequelle eine elektrische Wärmequelle sein, vorzugsweise ein elektrischer Heizstab, der thermisch mit dem Wärmeleit-Korpus gekoppelt ist.

Die vertikalen Abschnitte des Rohrbündels weisen vorzugsweise Wärmeleitlamellen bzw. Konvektorlamellen auf, die quer oder längs zu den vertikalen Abschnitten verlaufen.

Die Rohrbündel können parallel oder in Reihe zu einem Heizregister verschaltet sein, wobei die unteren gebogenen Abschnitte in einem gemeinsamen Wärmeleit-Korpus aufgenommen sind.

Weitere bevorzugte Ausführungen zeichnen sich dadurch aus, dass als Wärmequelle auch andere Medien flüssig oder gasförmig wirksam sind und/oder dass Temperaturen außerhalb des Temperaturbereichs von Wasser möglich sind, wobei das Arbeitsmittel in den Wärmerohren den Temperaturbereich des Heizkörpers bestimmt und/oder dass das Arbeitsmittel in den Wärmerohren den Temperaturbereich des Heizkörpers bestimmt und/oder dass das Arbeitsmittel in den Wärmerohren die Wärmeleistung des Heizkörpers bestimmt.

Die Erfindung zeichnet sich auch durch einen Heizkörper, umfassend mehrere mit einem Arbeitsmittel gefüllte, vorzugsweise parallel oder im Wesentlichen parallel verlaufende Wärmerohre mit jeweils einem ersten Ende und einem zweiten Ende sowie eine Wärmequelle, die thermisch mit den ersten und/oder zweiten Enden der Wärmerohre gekoppelt ist.

Ein solcher Heizkörper zeichnet sich dadurch aus, dass die ersten Enden der Wärmerohre offen ausgebildet sind und mit einem ersten Querverbindungsrohr in Fluidverbindung stehen und/oder dass die zweiten Enden der Wärmerohre offen ausgebildet sind und mit einem zweiten Querverbindungsrohr in Fluidverbindung stehen, wobei die Wärmerohre und die Querverbindungsrohre einen gemeinsamen und mit dem Arbeitsmittel gefüllten Hohlraum bilden und dass das erste oder zweite Querverbindungsrohr thermisch mit der Wärmequelle gekoppelt ist, um Wärme aus der Wärmequelle aufzunehmen.

Es ist vorgesehen, dass die ersten Enden der Wärmerohre offen ausgebildet sind und mit einem ersten Querverbindungsrohr in Fluidverbindung stehen und/oder dass die zweiten Enden der Wärmerohre offen ausgebildet sind und mit einem zweiten Querverbindungsrohr in Fluidverbindung stehen, wobei die Wärmerohre und die Querverbindungsrohre einen gemeinsamen mit dem Arbeitsmittel gefüllten Hohlraum bilden und dass das erste oder zweite Querverbindungsrohr thermisch mit der Wärmequelle gekoppelt ist, um Wärme aus der Wärmequelle aufzunehmen.

Durch die Verbindung der ersten bzw. zweiten offenen Enden der Wärmerohre mittels Querverbindungsrohren erfolgt ein Wärmeausgleich zwischen den einzelnen Wärmerohren, wodurch gegenüber Heizkörpern nach dem Stand der Technik eine homogenere Temperaturverteilung erreicht wird. Im Vergleich zu WarmwasserHeizkörpern nach dem Stand der Technik ist durch die Erfindung der Wärmeertrag erhöht. Auch kann das Wasservolumen in den Heizkörperkavitäten und somit auch das umlaufende Wasservolumen verringert werden. Fernere konnte festgestellt werden, dass die Wärmestrahlen emittierenden Flächen, Rippen und/oder Lamellen schneller ihre vorgegebene Temperatur erreichen.

Durch die homogene Temperaturverteilung kann die Positionsfestlegung von Heizkostenerfassungsgeräten vereinfacht werden. Insbesondere ist die Wärmeleistung unabhängig von den Anschlussarten konstant. Durch die erfindungsgemäße Ausführung wird erreicht, dass ein schnelles Aufheizen der Wärme abstrahlenden Flächen, eine homogene Wärmeverteilung der abstrahlenden Flächen, Rippen und/oder Lamellen, ein schnelles Regelverhalten unabhängig von der Anschlussart und eine Energiekosteneinsparung von bis zu 40 % gegenüber herkömmlichen Heizkörpern erreicht wird.

Eine bevorzugte Ausführungsform sieht vor, dass die Wärmerohre parallel zueinander angeordnet sind und in Betriebsstellung vertikal verlaufen. Bei dieser Ausführung sind die Wärmerohre vorzugsweise als Gravitationswärmerohre ausgebildet.

Das Arbeitsmittel ist vorzugsweise ein, handelsübliches, frei zugängliches Kältemittel und/oder Kältemittel-Mix (zeotropisches Gemisch), mit einem GWP-Wert (Global Warming Potential) unter 2500 respektive einem GWP-Wert unter 750 aus der Gruppe der-HFKW und/oder FKW und/oder geeigneter Kältemittel.

Bei einer weiteren bevorzugten Ausführungsform ist vorgesehen, dass das erste, untere Querverbindungsrohr mit der Wärmequelle verbunden ist und einen Verdampfer für das Arbeitsmedium bildet, während das zweite, oberer Querverbindungsrohr einen Kondensator für das Arbeitsmedium bildet.

Zur Verbesserung der Abstrahlung der Wärme ist vorgesehen, dass die Wärmerohre und/oder die Querverbindungsrohre entlang Längsrichtung wärmeabstrahlende Elemente, wie Flächenelemente, Rippen und/oder Lamellen aufweisen.

Vorzugsweise liegen die Flächenelemente der einzelnen Wärmerohre und/oder Querverbindungsrohre in einer Ebene.

Vorzugsweise ist die Wärmequelle ein von einem gasförmigen oder flüssigen Heizmedium, wie Wasser, durchströmbares Heizungsrohr. Das Heizungsrohr ist in dem ersten oder zweiten Querverbindungsrohr entlang einer Längsachse koaxial angeordnet und von dem Arbeitsmittel umgeben.

Vorzugsweise sind Anschlussstutzen für Vor- und Rücklauf des Heizungsrohres stirnseitig druck- und fluiddicht mit dem Querverbindungsrohr verbunden.

Alternativ kann das Heizungsrohr auch parallel oder im Wesentlichen parallel zu dem ersten oder zweiten Querverbindungsrohr verlaufen und thermisch mit diesem gekoppelt sein.

Um den erfindungsgemäßen Heizkörper an verschiedene Anschlusstypen anzupassen ist vorgesehen, dass das Heizungsrohr einen Vorlauf und einen Rücklauf aufweist, wobei der Vorlauf über ein erstes Bypass-Rohr mit einem vorzugsweise handelsüblichem Regelventil verbunden ist, welches an einem stirnseitig von dem zweiten Querverbindungsrohr ausgehenden Stutzen angekoppelt ist und dass von dem Regelventil ein zweites Bypass-Rohr, welches vorzugsweise parallel zu dem ersten Bypass-Rohr verläuft, in Fluidverbindung mit dem Heizungsrohr steht und mit dem Rücklauf gekoppelt ist.

Bei dieser Ausführungsform ist ergänzend vorgesehen, dass in dem Heizungsrohr eine Strömungstrennvorrichtung zur Regulierung des Durchflusses des Heizmediums, wie Wasser, angeordnet ist. Die Strömungstrennvorrichtung kann von einer in einer stirnseitigen Öffnung des Heizungsrohres angeordneten Blende koaxial in Längsrichtung des Heizungsrohres ausgehen, wobei mittels der Blende eine Anschlussart des Heizkörpers voreinstellbar ist.

Alternativ ist vorgesehen, dass die Wärmequelle eine elektrische Wärmequelle, wie elektrischer Heizstab ist. Vorzugsweise ist der elektrische Heizstab in einem Rohr aufgenommen, welches thermisch mit dem ersten oder zweiten Querverbindungsrohr gekoppelt und vorzugsweise zumindest abschnittsweise von dem Arbeitsmittel umgeben ist. Durch die elektrische Wärmequelle wird der Vorteil erreicht, dass die Wärmestrahlen emittierenden Flächen, Rippen und/oder Lamellen schneller ihre vorgegebene Temperatur erreichen. Auch kann die Heizkörpertemperatur und damit die Raumtemperatur schneller geregelt werden.

Eine besonders bevorzugte Ausführungsform zeichnet sich dadurch aus, dass das erste und/oder zweite Querverbindungsrohr als doppelwandiges Rohrgebilde ausgebildet ist, wobei das Rohr zur Aufnahme des Heizstabs ein Innenrohr des doppelwandigen Rohrgebildes ist und formschlüssig mit zumindest einer stirnseitigen Öffnung für den Heizstab in das Querverbindungsrohr eingefügt, vorzugsweise fluiddicht und druckfest verbunden ist.

Zu Verbesserung des Wärmeübergangs zwischen dem elektrischen Heizstab und dem Innenrohr ist vorgesehen, dass der elektrische Heizstab vorzugsweise über ein Wärmeleitmittel, wie Wärmeleitpaste, mit dem Rohr oder Innenrohr des ersten oder zweiten Querverbindungsrohrs thermisch gekoppelt ist.

Vorzugsweise sind die mit den Wärmerohren gekoppelten wärmeabstrahlenden Elemente als quer zu den Wärmerohren verlaufende Konvektorlamellen oder parallel zu den Rohren verlaufende flächige Elemente ausgebildet.

Auch können zwei oder mehrere Heizkörper parallel oder in Reihe zu einem Heizregister verschaltet sein.

Vorteilhaft kann der Heizkörper bzw. das Heizregister mit einem Ventilator gekoppelt sein, dessen Strömungsrichtung rechtwinklig zu einer von dem Heizkörper aufgespannten Ebene verläuft. Dadurch kann Luft durch die Konvektorlamellen hindurch gefördert werden, um die Wärmeabgabe zu verbessern.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines bevorzugten Ausführungsbeispiels.

Es zeigen:
- Fig. 1: eine Schnittdarstellung einer ersten Ausführungsform eines Heizkörpers mit Wärmerohren,
- Fig. 2: eine perspektivische Darstellung eines Wärmerohrs des Heizkörpers gemäß Fig. 1,
- Fig. 3: eine Schnittdarstellung Heizkörper gemäß Fig. 1 mit einem Arbeitsmittel befüllt,
- Fig. 4: eine Schnittdarstellung des Heizkörpers gemäß Fig. 1 mit einem Heizmedium befüllt,
- Fig. 5: eine Vorderansicht des Heizkörper gemäß Fig. 1, teilweise geschnitten, mit flächigen Wärmeabstrahlelementen,
- Fig. 6: ein Wärmerohr des Heizkörpers gemäß Fig. 5 mit flächigen Wärmeabstrahlelement als Radiator, um 90° gedreht dargestellt,
- Fig. 7: eine Schnittdarstellung des Heizkörpers gemäß Fig. 1 vorzugsweise in Ausführung Stahl mit einer Anschlussvorrichtung, umfassend Vorlauf und Rücklauf sowie Bypass-Rohre für universalen Anschluss,
- Fig. 8: eine Schnittdarstellung des Heizkörpers gemäß Fig. 1 vorzugsweise in Ausführung Aluminium mit einer Anschlussvorrichtung, umfassend Vorlauf und Rücklauf sowie Bypass-Rohre für universalen Anschluss,
- Fig. 9: eine Schnittdarstellung des Heizkörpers gemäß Fig. 7 befüllt mit Arbeitsmittel,
- Fig. 10: eine Schnittdarstellung des Heizkörpers gemäß Fig. 8 befüllt mit Arbeitsmittel,
- Fig. 11: eine Schnittdarstellung des Heizkörpers gemäß Fig. 7 befüllt mit Heizmedium,
- Fig. 12: eine Schnittdarstellung des Heizkörpers gemäß Fig. 8 befüllt mit Heizmedium,
- Fig. 13: eine Schnittdarstellung des Heizkörpers gemäß Fig. 8 vorzugsweise in Ausführung Aluminium mit einer Anschlussvorrichtung, umfassend Vorlauf und Rücklauf sowie Bypass-Rohre für reitenden Anschluss und Anschluss unten rechts,
- Fig. 14a: eine Vorderansicht des Heizkörpers gemäß Fig. 7 oder 8 mit einer beispielhaften ersten Ausführung von Wärmeabstrahlelementen,
- Fig. 14b: eine Vorderansicht eines Heizkörpers gemäß Fig. 7 oder 8 mit einer beispielhaften alternativen Ausführung von Wärmeabstrahlelementen,
- Fig. 15: ein Wärmerohr des Heizkörpers gemäß Fig. 14 mit Wärmeabstrahlelementen in Form von Rippen als Radiator, um 90° gedreht dargestellt,
- Fig. 16: eine Schnittdarstellung einer zweiten Ausführungsform eines Heizkörpers mit elektrischer Wärmequelle in Form eines Elektro-Heizstabs,
- Fig. 17: eine Schnittdarstellung des Heizkörpers gemäß Fig. 16 befüllt mit Arbeitsmittel,
- Fig. 18: eine Vorderansicht des Heizkörpers gemäß Fig. 16, teilweise in Schnittdarstellung, mit Elektro-Heizstab als Wärmequelle und beispielhaft rechtsseitig mit Wärmeabstrahlelementen verkleidet,
- Fig. 19: eine Schnittdarstellung einer dritten Ausführungsform eines Heizkörpers in Form eines Heizregisters mit Lamellen als Wärmeabstrahlelemente,
- Fig. 20: eine Schnittdarstellung des Heizkörpers gemäß Fig. 19 befüllt mit Arbeitsmittel,
- Fig. 21: eine Schnittdarstellung des Heizkörpers gemäß Fig. 19 befüllt mit Heizmedium,
- Fig. 22: eine Schnittdarstellung einer vierten Ausführungsform eines Heizkörpers in Form eines Heizregisters mit Elektro-Heizstab als Wärmequelle,
- Fig. 23a: eine Schnittdarstellung eines Heizkörpers mit zweit Heizregistern gem. Fig. 20 in Parallelschaltung,
- Fig. 23b: eine Draufsicht des Heizkörpers gemäß Fig. 23a,
- Fig. 23c: eine Seitenansicht des Heizkörpers gemäß Fig. 23a,
- Fig. 24: eine schematische Darstellung des Heizregister-Heizkörpers gemäß Fig. 23a-c,
- Fig. 25a: eine Schnittdarstellung eines Heizkörpers mit zweit Heizregistern gem. Fig. 22 in Parallelschaltung, mit Elektro-Heizstäben als Wärmequelle,
- Fig. 25b: eine Draufsicht des Heizkörpers gemäß Fig. 25a,
- Fig. 25c: eine Seitenansicht des Heizkörpers gemäß Fig. 25a,
- Fig. 26: eine schematische Darstellung des Heizregister-Heizkörpers gemäß Fig. 25a-c,
- Fig. 27: eine Schnittdarstellung einer fünften Ausführungsform eines Heizkörpers in Form eines mäanderförmigen Wärmerohr-Rohrbündels mit Wärmequelle in Form eines Heizungsrohrs,
- Fig. 28: eine Schnittdarstellung einer sechsten Ausführungsform eines Heizkörpers in Form eines mäanderförmigen Wärmerohr-Rohrbündels mit Wärmequelle in Form eines Elektro-Heizstabs,
- Fig. 29a: eine Schnittdarstellung einer achten Ausführungsform eines Heizkörpers in Form eines Rohrbündel-Heizregisters mit drei Registersegmenten, Rohrbündel in Reihenschaltung, Registersegmente in paralleler Anordnung, gemäß Fig. 27, Heizmedium-Rohre in Parallelschaltung,
- Fig. 29b: eine Draufsicht des Rohrbündel-Heizregisters gemäß Fig. 29a,
- Fig. 29c: eine Schnittdarstellung des Rohrbündel-Heizregisters gemäß Fig. 29a entlang Schnitt A-A,
- Fig. 29d: eine Schnittdarstellung des Rohrbündel-Heizregisters gemäß Fig. 29a entlang Schnitt C-C,
- Fig. 29e: eine Seitenansicht und Schnittdarstellung des Rohrbündel-Heizregisters gemäß Fig. 29a entlang Schnitt B-B, gemäß Fig. 29c, d,
- Fig. 29f: eine Seitenansicht des Rohrbündel-Heizregisters gemäß Fig. 29d,
- Fig. 30a: eine Schnittdarstellung einer neunten Ausführungsform eines Heizkörpers in Form eines Rohrbündel-Heizregisters gemäß Fig.28 beispielhaft mit drei Registersegmenten Rohrbündel in Reihenschaltung Registersegmente in Parallelschaltung mit elektrischer Wärmequelle,
- Fig. 30b: eine Draufsicht des Rohrbündel-Heizregisters gemäß Fig. 30a,
- Fig. 30c: eine Schnittdarstellung des Rohrbündel-Heizregisters gemäß Fig. 30a entlang Schnitt A-A,
- Fig. 30d: eine Schnittdarstellung des Rohrbündel-Heizregisters gemäß Fig. 30a entlang Schnitt C-C,
- Fig. 30e: eine Seitenansicht und Schnittdarstellung des Rohrbündel-Heizregisters gemäß Fig. 30a entlang Schnitt B-B gemäß Fig.30c, d,
- Fig. 31a: eine Schnittdarstellung einer zehnten Ausführungsform eines Heizkörpers in Form eines Rohrbündel-Heizregisters mit beispielhaft drei Registersegmenten in paralleler Anordnung, Rohrbündel in Reihenschaltung mit vorzugsweise Wasser als Wärmequelle, Heizmedium-Rohre in Parallelschaltung,
- Fig. 31b: eine Draufsicht des Rohrbündel-Heizregisters gemäß Fig. 31a,
- Fig. 31c: eine Schnittdarstellung des Rohrbündel-Heizregisters gemäß Fig. 31a entlang Schnitt A-A,
- Fig. 31d: eine Schnittdarstellung des Rohrbündel-Heizregisters gemäß Fig. 31a entlang Schnitt C-C,
- Fig. 31e: eine Seitenansicht und Draufsicht des Rohrbündel-Heizregisters gemäß Fig. 31a entlang Schnitt B-B gemäß Fig.31c, d,
- Fig. 31f: eine Seitenansicht des Rohrbündel-Heizregisters gemäß Fig. 31d,
- Fig. 32a: eine Schnittdarstellung einer elften Ausführungsform eines Heizkörpers in Form eines Rohrbündel-Heizregisters gemäß Fig.27 mit beispielhaft drei Registersegmenten in paralleler Anordnung, Rohrbündel in Reihenschaltung, Heizmedium-Rohre in Reihenschaltung,
- Fig. 32b: eine Draufsicht des Rohrbündel-Heizregisters gemäß Fig. 32a,
- Fig. 32c: eine Schnittdarstellung des Rohrbündel-Heizregisters gemäß Fig. 32a entlang Schnitt A-A,
- Fig. 32d: eine Schnittdarstellung des Rohrbündel-Heizregisters gemäß Fig. 32a entlang Schnitt C-C,
- Fig. 32e: eine Seitenansicht und Schnittdarstellung des Rohrbündel-Heizregisters gemäß Fig. 32a entlang Schnitt B-B gemäß Fig. 32c, d,
- Fig. 32f: eine Seitenansicht des Rohrbündel-Heizregisters gemäß Fig. 32d,

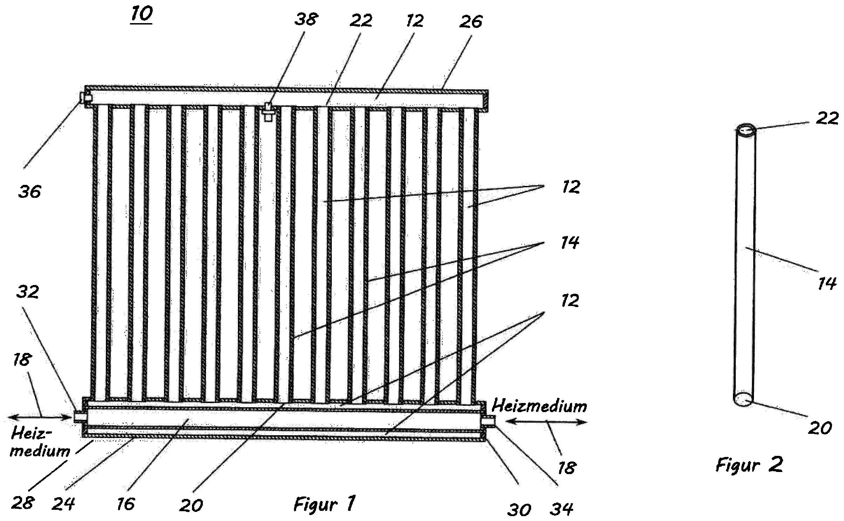

Fig. 1 zeigt einen Heizkörper 10 in Schnittdarstellung, umfassend mehrere evakuierte und mit einem Arbeitsmittel 12 gefüllte parallel oder im Wesentlichen parallel verlaufende Wärmerohre 14 sowie eine Wärmequelle 16 in Form eines von einem Heizmedium 18 wie Wasser durchflossenen Heizungsrohrs, welches thermisch mit den Wärmerohren 14 gekoppelt ist.

Gemäß dieser Ausführung sind die Wärmerohre 14 als Gravitations-Wärmerohre ausgebildet und umfassen jeweils erste offene Enden 20 und zweite offene Enden 22. Die ersten offenen Enden münden in einem ersten, geschlossenen Querverbindungsrohr 24 und sind mit diesem fluiddicht verbunden. Die zweiten offenen Enden 22 münden in ein geschlossenes, zweites Querverbindungsrohr 26 und stehen mit diesem fluiddicht in Fluidverbindung.

Die Hohlräume der Wärmerohre 14 sowie der Querverbindungsrohre 24, 26 bilden einen einheitlichen Hohlraum, der evakuiert und mit dem Arbeitsmedium 12 gefüllt ist. Als Arbeitsmedium wird vorzugsweise ein nicht brennbares, handelsübliches und frei zugängliches Kältemittelmix wie beispielsweiseaus aus der Gruppe HFKW teilhalogenierte Fluorkohlenwasserstoffe in einem zeotropischem Gemisch verwendet. Der Druck im Inneren der Wärmerohre 14 und Querverbindungsrohre 24, 26 beträgt vorzugsweise 33 bar, abhängig der Heizkörper- oberflächen-Temperatur bis 70°C. Mittels geeigneter Arbeitsmittel können auch Temperaturen außerhalb von Warmwasserheizungen erreicht werden.

Das Querverbindungsrohr 24 nimmt das Heizungsrohr 16 in koaxialer Richtung auf, wobei das Querverbindungsrohr an seinen Stirnseiten 28, 30 fluiddicht geschlossen ist und nur Anschlussstutzen 32, 34 des Heizungsrohrs aus den Stirnflächen 28, 30 münden. In dem zweiten Querverbindungsrohr ist vorzugsweise stirnseitig ein Befüllventil 36 und beispielhaft mittig in einer Rohrwandung ein Sicherheitsventil 38 angeordnet. Konstruktiv ist auch jede andere vorteilhafte Lage des Sicherheitsventils im Querverbindungsrohr oder den vom Arbeitsmittel befüllten Holräumen möglich. Wenn technische Richtlinien es erfordern, ist eine vorteilhafte Sicherheitskapselung des Ventils vorgesehen. Das erste, untere Querverbindungsrohr 24 bildet im Wesentlichen einen Verdampfer (Fluid-Kollektor) und das zweite, obere Querverbindungsrohr 26 bildet einen Kondensator (Vapour-Kollector).

Fig. 2 zeigt das Wärmerohr 14 in Form eines Gravitations-Wärmerohrs in einfacher Ausführung. Die Wärmerohre 14 sowie die Querverbindungsrohre 24, 26 können aus Aluminium, Kupfer, C-Stahl und/oder VA-Stahl oder anderen wärmeleitenden und festen Werkstoffen sowie einer Kombination verschiedener Werkstoffe ausgeführt sein.

Das Wärmerohr 14 ist eine Vorrichtung, die dem Transport von Wärme dient und die dafür ein bewegliches Arbeitsmedium, z.B. Wasser, Ammoniak oder Kältemittel, verwendet, welches in einem Kreislauf verdampft und wieder kondensiert. Das Arbeitsmedium ist zunächst flüssig und wird durch das Heizungsrohr 16 in dem ersten Querverbindungsrohr 24 unter Aufnahme von Wärme, der Verdampfungswärme, verdampft. Das Arbeitsmittel bewegt sich dann von den ersten offenen Enden 20 durch die Wärmerohre 14 zu den zweiten offenen Enden 22, wo es unter Abgabe von Wärme wieder kondensiert. Die Flüssigkeit gelangt dann wieder zu den ersten offenen Enden bzw. in das erste Querverbindungsrohr zurück.

Hierbei ist anzumerken, dass das Arbeitsmedium im Wesentlichen nicht fühlbare Wärme, sondern latente Wärme transportiert. Dies bedeutet, dass kaum eine Temperaturänderung stattfindet, sondern ein Verdampfen bzw. Kondensieren, so dass die Verdampfungswärme bzw. Kondensationswärme übertragen wird.

Das Rohrgebilde aus Querverbindungs- und Wärmerohren arbeitet überraschenderweise als Zwei-Phasen-Thermosiphon. Die Umwälzung des Arbeitsmediums erfordert beim Thermosiphon eine mehr oder weniger vertikale Ausrichtung des Wärmerohrs, so dass der Wärmetransport nur von unten nach oben funktioniert; sogenannte Gravitations-Wärmerohre. Das flüssige Arbeitsmedium fließt nämlich durch die Schwerkraft nach unten, im vorliegenden Fall zum ersten Querverbindungsrohr (Verdampfer), während das dort verdampfte Medium nach oben zum zweiten Querverbindungsrohr (Kondensator) steigen kann. Eine relativ flache Ausrichtung ist möglich, so lange das Arbeitsmedium noch zuverlässig nach unten fließen kann. Da beim Thermosiphon die Schwerkraft (Gravitation) ausgenutzt wird, spricht man auch von einem Gravitationswärmerohr.

Das zuvor beschriebene Prinzip wird auch bei den nachfolgenden Ausführungsformen verschiedener Heizkörper verwendet.

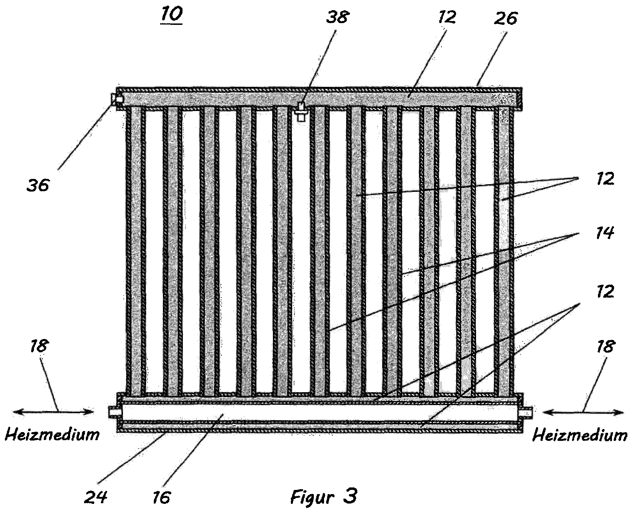

Fig. 3 zeigt den Heizkörper 10 gemäß Fig. 1 in Schnittdarstellung, wobei ein durch die Wärmerohre 14 und die Querverbindungsrohre 24, 26 gebildeter Hohlraum mit dem Arbeitsmittel 12 gefüllt, grau dargestellt, ist.

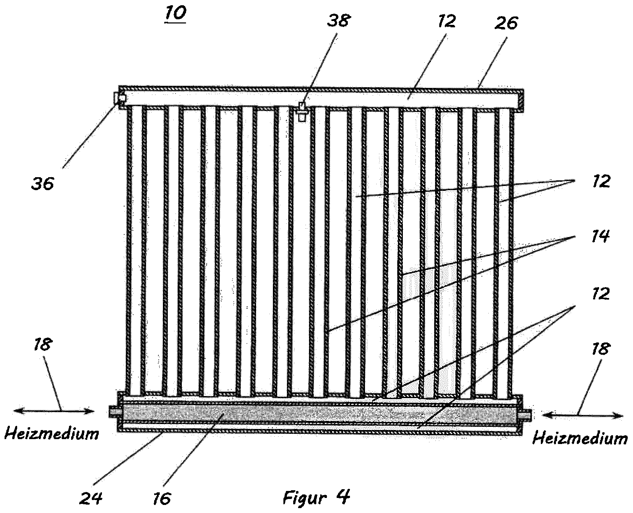

Fig. 4 zeigt eine Seitenansicht des Heizkörpers 10, wobei das in dem Heizungsrohr 16 fließende Heizmedium 18, wie Wasser, grau dargestellt ist.

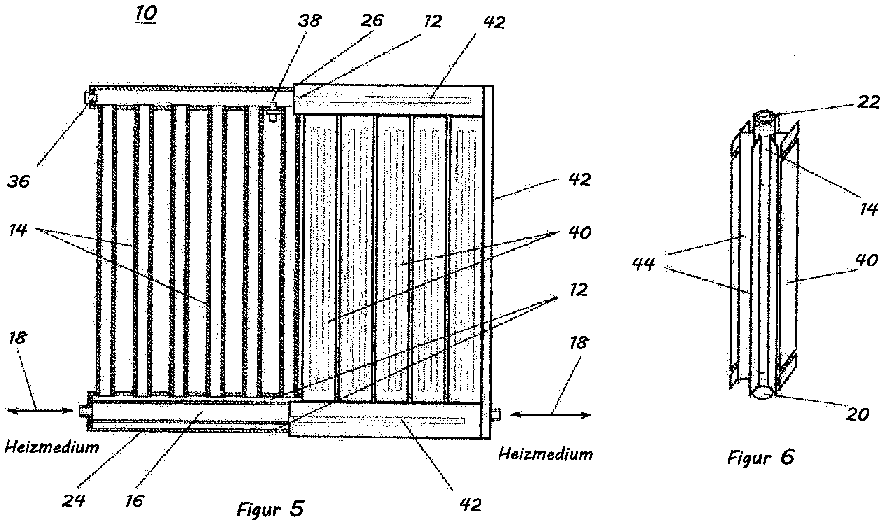

Fig. 5 zeigt den Heizkörper 10, teilweise in Schnittdarstellung und teilweise mit Verkleidungselementen 42 und Strahlungsblechen 40, die mit den Wärmerohren 14 bzw. Querverbindungsrohren 24, 26 thermisch gekoppelt sind.

Fig. 6 zeigt in perspektivischer Darstellung das Wärmerohr 14 mit dem flächigen Wärmestrahlungselement 40, welches über Verbindungsbleche 44 als Kovektionselemente mit dem Wärmerohr 14 thermisch gekoppelt ist. Die Wärmestrahlungselemente 40, 44 liegen im montierten Zustand in einer Ebene und sind vorzugsweise sowohl auf einer Vorderseite, als auch auf einer Rückseite des Heizkörpers.

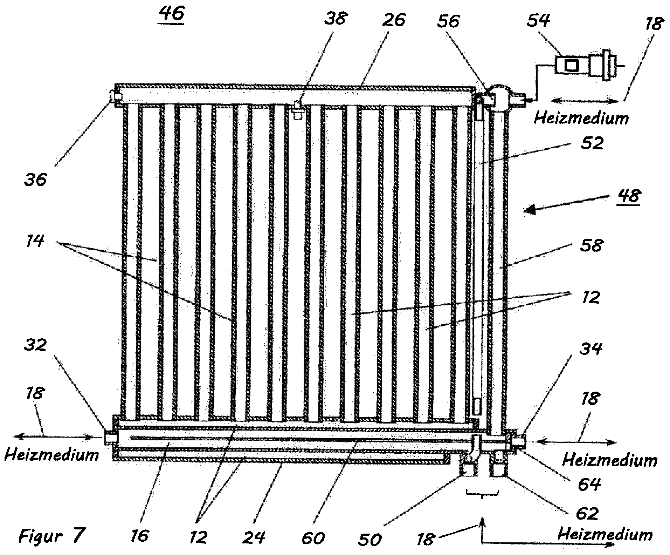

Fig. 7 zeigt eine zweite Ausführungsform eines Heizkörpers 46, vorzugsweise in Stahlausführung, mit einem an verschiedene Heizköperanschlüsse adaptierbaren Anschlusssystem 48. Das Anschlusssystem 48 umfasst einen Vorlaufanschluss 50, der über ein Bypass-Rohr 52 mit einem Eingang eines vorzugsweise handelsüblichen Regelventils 54 verbunden ist, welches an einem von dem zweiten Querverbindungsrohr 26 ausgehenden Andock-Rohrende 56 angekoppelt ist. Von dem Regelventil 54 verläuft ein zweites Bypass-Rohr 58 in Richtung des Heizungsrohrs 16 und ist mit diesem in Fluidverbindung. Koaxial im Inneren des Heizungsrohrs 16 ist ein Heizmedium-Strömungsteiler 60 angeordnet, über den Heizmedium von dem zweiten Bypass-Rohr 58 durch das Heizungsrohr 16 und zurück zu einem Rücklaufanschluss 62 geführt wird. Der Heizmedium-Strömungsteiler 60 geht von einer Blende 64 aus, die in einer stirnseitigen Querschnittsfläche des Heizungsrohrs 16 angeordnet ist, um den Heizköper entweder über die Anschlussstutzen 32, 34 des Heizungsrohrs 16 oder über den Vorlauf- und Rücklaufanschlüsse 50, 62 zu betreiben.

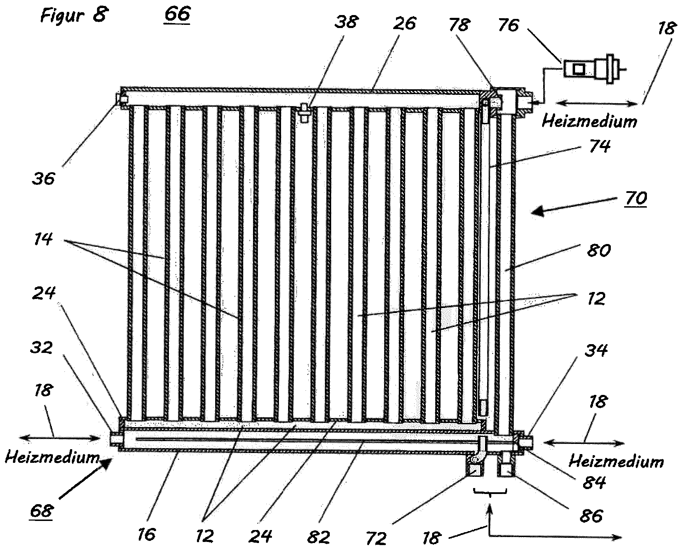

Fig. 8 zeigt eine dritte Ausführungsform eines Heizkörpers 66, vorzugsweise in Ausführung Aluminium. Diese Ausführungsform unterscheidet sich von der Ausführungsform gemäß Fig. 7 dadurch, dass das erste Querverbindungsrohr 24 und das Heizungsrohr 16 nebeneinander parallel verlaufen und thermisch gekoppelt sind. Vorzugsweise sind das erste Querverbindungsrohr 24 und das Heizungsrohr 16 als ein Strangprofil 68, vorzugsweise Aluminiumstrangprofil, ausgebildet.

Der Heizkörper 66 umfasst ebenfalls ein universales Anschlusssystem 70 mit einem Zulauf 72 der über ein erstes Bypass-Rohr 74 mit einem handelsüblichem Heizkörper-Regelventil 76 verbunden ist, welches mit einem Andock-Rohrende 78 des zweiten Querverbindungsrohrs 26 angekoppelt ist. Von dem Regelventil 76 verläuft ein zweites Bypass-Rohr 80 in Richtung des Heizungsrohres 16 und ist mit diesem in Fluidverbindung. Koaxial im Inneren des Heizungsrohres 16 verläuft ein Heizmedium-Strömungsteiler 82, der mit einer Blende 84 verbunden ist, die in einer stirnseitigen Öffnung des Heizungsrohrs 16 angeordnet ist. Über das zweite Bypass-Rohr 80 wird das Heizmedium entlang des Heizmedium-Strömungsteilers 82 in Längsrichtung des Heizungsrohrs und zurück zu einem Rücklaufanschluss 86 geführt.

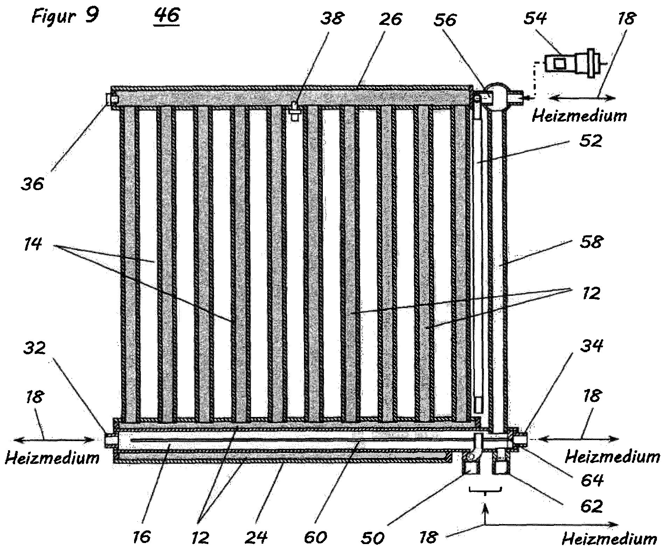

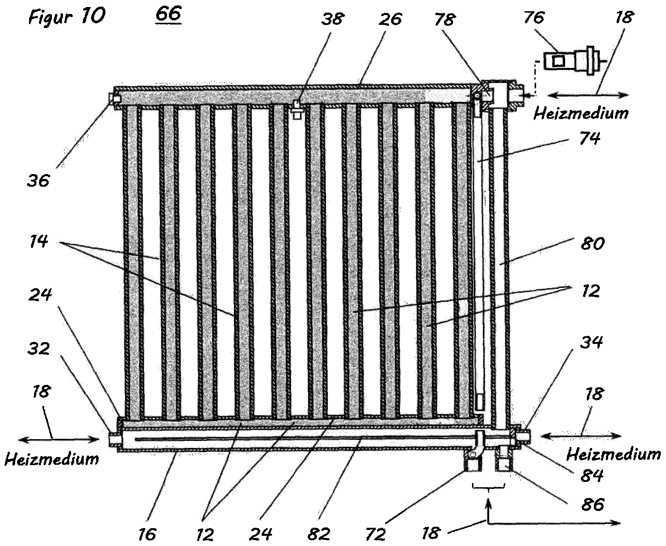

Fig. 9 zeigt den Heizkörper 46 in Stahlausführung mit gefülltem Arbeitsmittel und Fig. 10 zeigt den Heizkörper 66 in Aluminiumausführung mit gefülltem Arbeitsmittel, jeweils grau dargestellt.

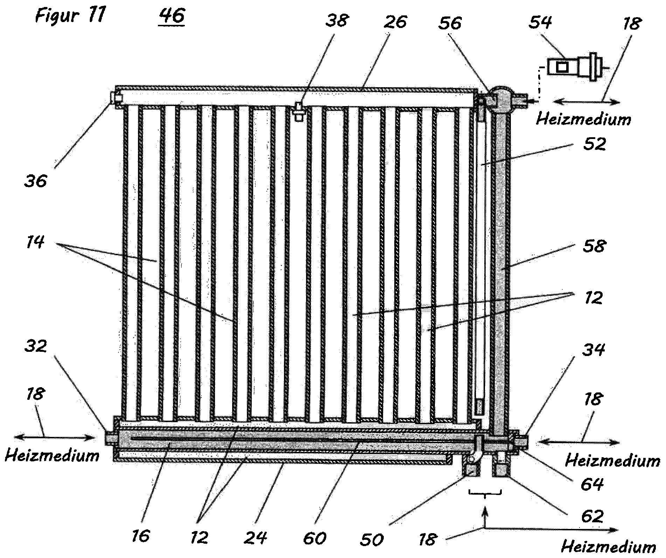

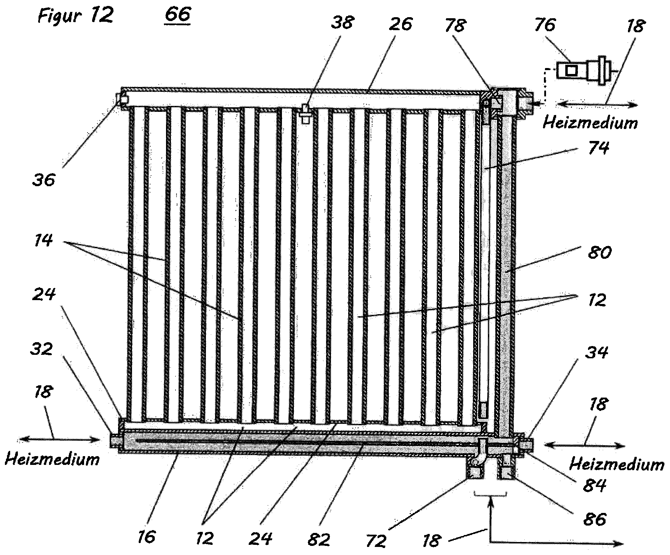

Fig. 11 und 12 zeigen jeweils die Heizkörper 46 und 66 mit gefülltem Heizmedium, jeweils grau dargestellt.

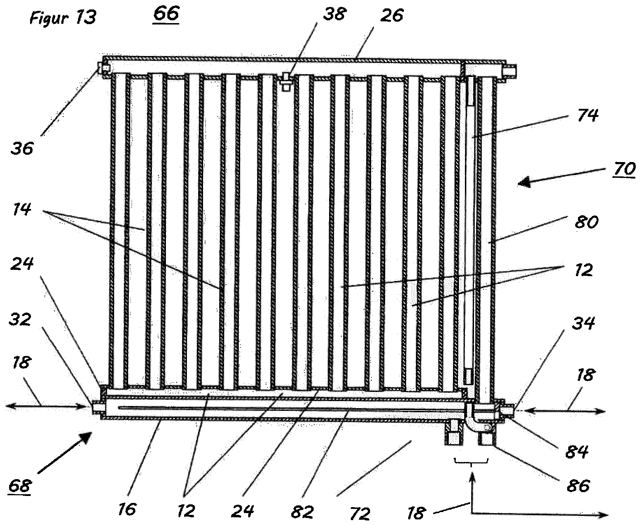

Fig. 13 zeigt eine Ausführungsform eines Heizkörpers 66 gemäß Fig. 8. Diese Ausführungsform unterscheidet sich von der Ausführungsform gemäß Fig. 8 dadurch, dass das Anschlusssystem 70 mit einem Zulauf 86 der über ein erstes Bypass-Rohr 74 mit dem zweiten Bypass-Rohr 80 und mit dem Rücklaufanschluss 72 thermisch gekoppelt ist. Das Anschlusssystem wirkt auch, wenn der Anschluss 72 der Vorlauf und der Anschluss 86 der Rücklauf ist. Der Heizkörper ist nur für "reitenden Anschluss" oder "Anschluss unten" geeignet, unabhängig der Fließrichtung (Vorlauf/Rücklauf) des Heizmediums 18.

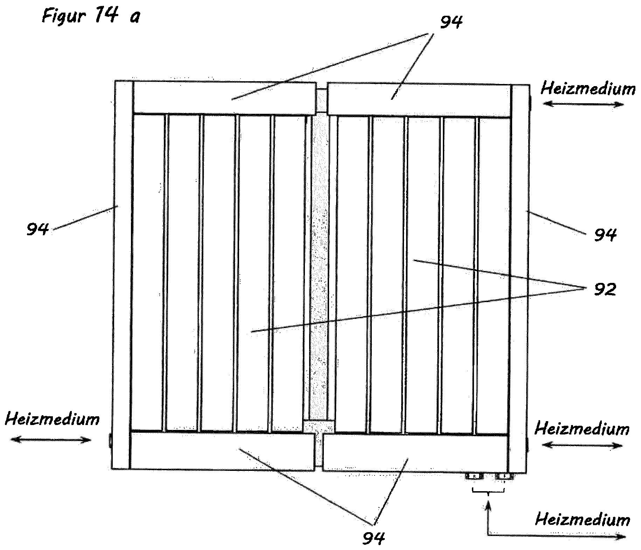

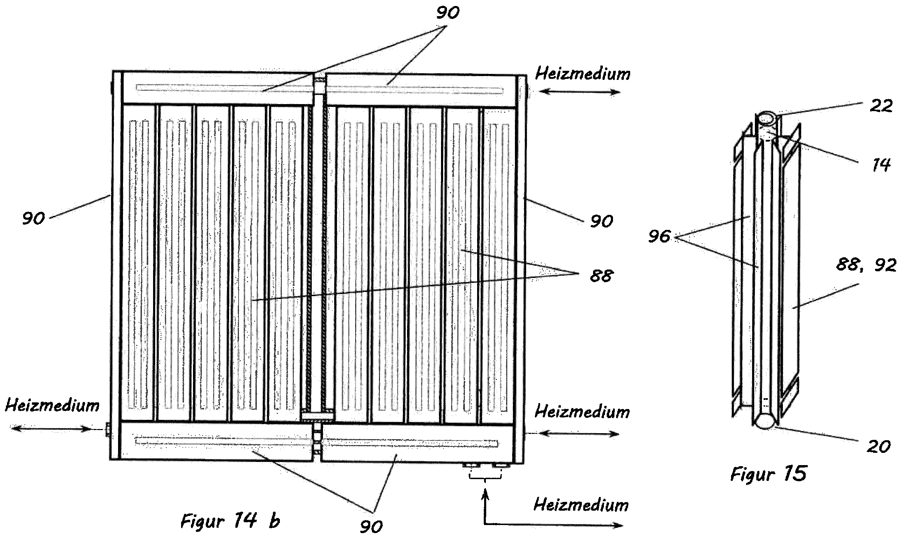

Die Fig. 14a und 14b zeigen beispielhaft verschiedene Ausführungsformen der Heizkörper 46, 66 mit flächigen Wärme abstrahlenden Flächenelementen 88, 92, die sich entlang der Wärmerohre 14, des Bypass-Rohrs 58 gemäß Fig. 7 und des Bypass-Rohrs 80 gemäß Fig. 8 und Fig. 13 erstrecken. Die Flächenelemente 90, 94 sind beispielhafte Verkleidungen.

Fig. 15 zeigt in perspektivischer Darstellung, das Wärmerohr 14 gemäß Fig. 14a, b mit dem flächigen Wärmestrahlelement 88, 92, welches über Verbindungsbleche als Konvektionselemente 96 mit dem Wärmerohr 14 in Längsrichtung thermisch gekoppelt ist. Die Wärmestrahlungselemente 88, 92 und Konvektionselemente 96 liegen im montierten Zustand in einer Ebene und sind vorzugsweise sowohl auf einer Vorderseite, als auch auf einer Rückseite des Heizkörpers fügetechnisch verbunden.

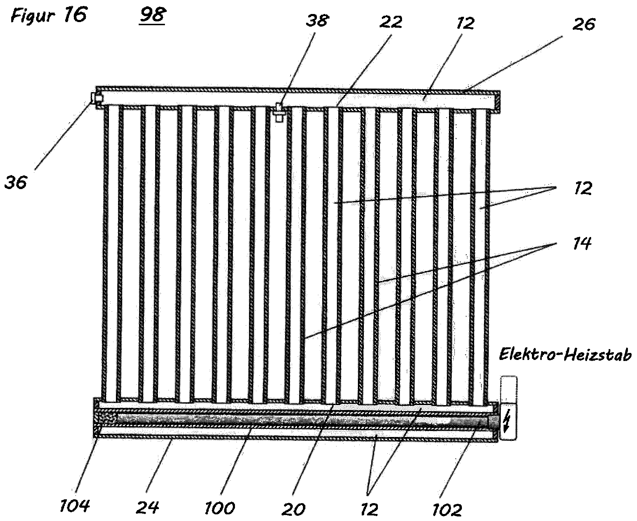

Fig. 16 zeigt eine vierte Ausführungsform eines Heizkörpers 98 in Schnittdarstellung, der im Wesentlichen denselben Aufbau wie der Heizkörper gemäß Fig. 1 aufweist, wobei gleiche Elemente mit gleichen Bezugszeichen versehen sind.

Das erste Querverbindungsrohr 24 weist, wie in Fig. 1 dargestellt, entlang der Mittelachse ein koaxiales Rohr 100 auf, welches im dargestellten Ausführungsbeispiel einen elektrischen Heizstab 102 in Längsrichtung aufnimmt. Um eine optimale Wärmeübertragung zwischen dem Heizstab 102 und dem Rohr 100 zu erreichen, ist vorgesehen, dass zwischen dem Heizstab 102 und dem Rohr 100 vorzugsweise ein Wärmeleitmittel 104 angeordnet ist. Das Rohr 100 ist stirnseitig fluiddicht mit dem Querverbindungsrohr 24 verbunden und wird außenseitig von dem Arbeitsmittel 12 umströmt.

Der Heizstab-Anschluss ist nicht auf die bildlich dargestellte Seite beschränkt, er kann auch an dem gegenüber liegenden Rohrende erfolgen, mit den wie vor beschriebenen erforderlichen fluiden Abdichtungen.

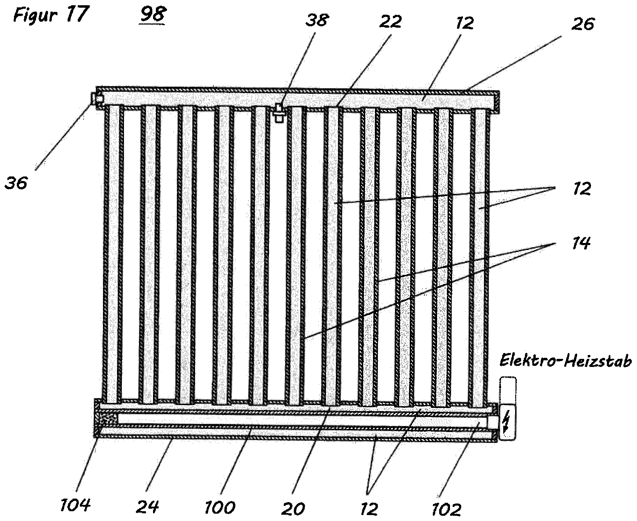

Fig. 17 zeigt den Heizkörper 98 mit gefülltem Arbeitsmedium 12, grau dargestellt.

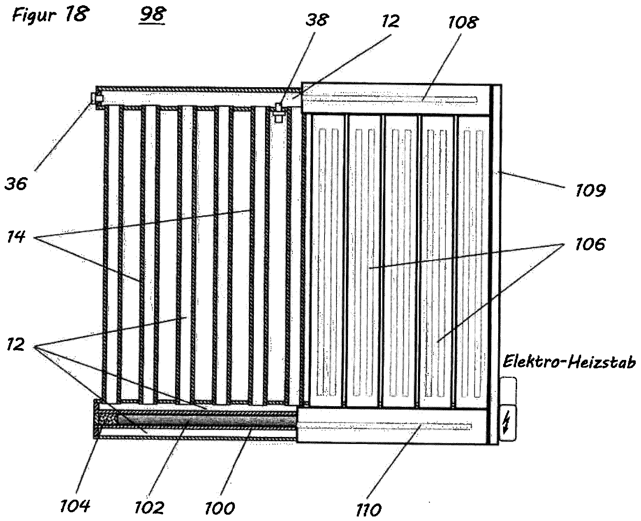

Fig. 18 zeigt den Heizkörper 98, teilweise in Schnittdarstellung und teilweise mit einer Verkleidung in Form von flächigen Wärmestrahlelementen 106; die in Längsrichtung der Wärmerohre 14 verlaufen. Die Flächenelemente 108, 109, 110 sind beispielhafte Verkleidungen.

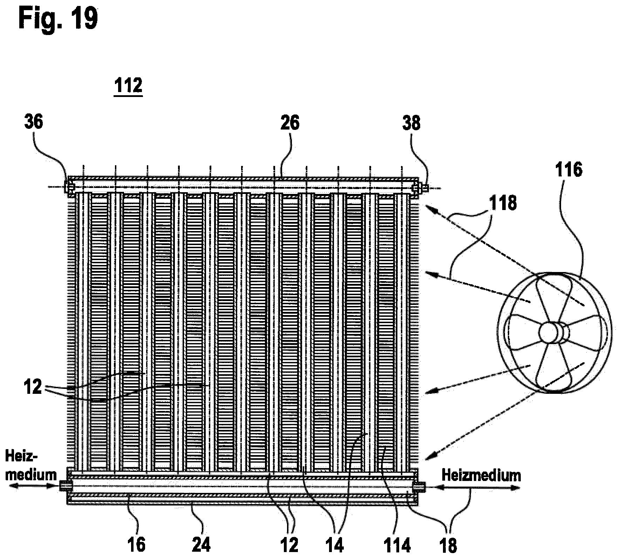

Fig. 19 zeigt eine fünfte Ausführungsform eines Heizkörpers 112, der im Wesentlichen den gleichen Aufbau wie der Heizkörper 10 gemäß Fig. 1 aufweist, wobei jedoch die Wärmerohre 14 über quer verlaufende Lamellen 114 thermisch gekoppelt sind. Ferner ist ein Ventilator 116 vorgesehen, über den eine Luftströmung 118 durch die zwischen den Lamellen 114 sich bildende Öffnungen geführt werden kann.

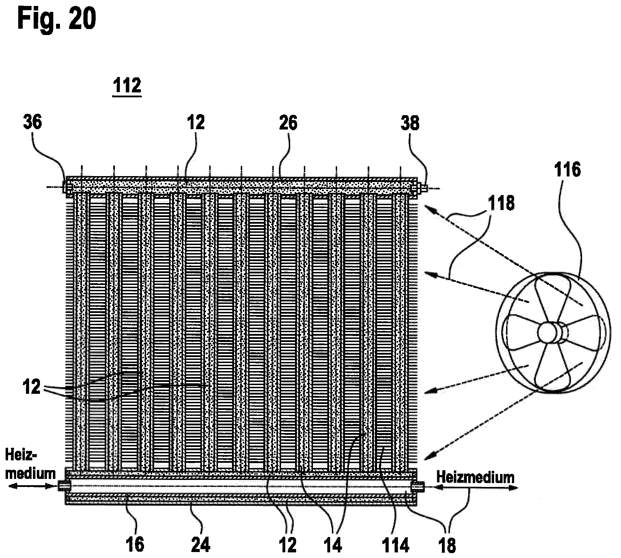

Fig. 20 zeigt den Heizkörper 112 gemäß Fig. 19 mit gefülltem Arbeitsmedium 12, grau dargestellt.

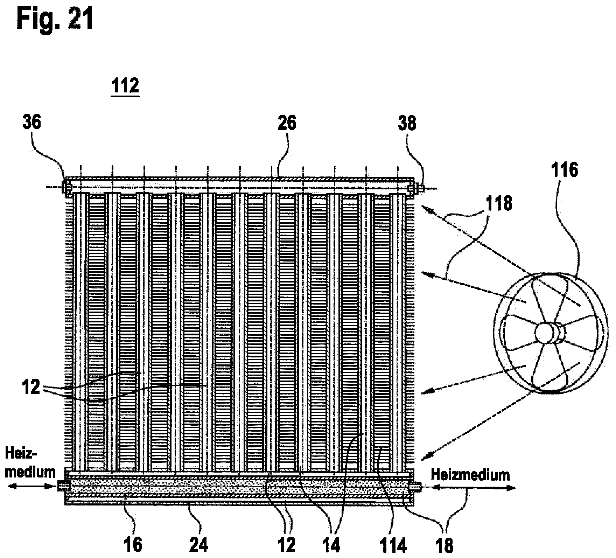

Fig. 21 zeigt den Heizkörper 112 gemäß Fig. 19 mit gefülltem Heizmedium, wie Wasser 18, grau dargestellt.

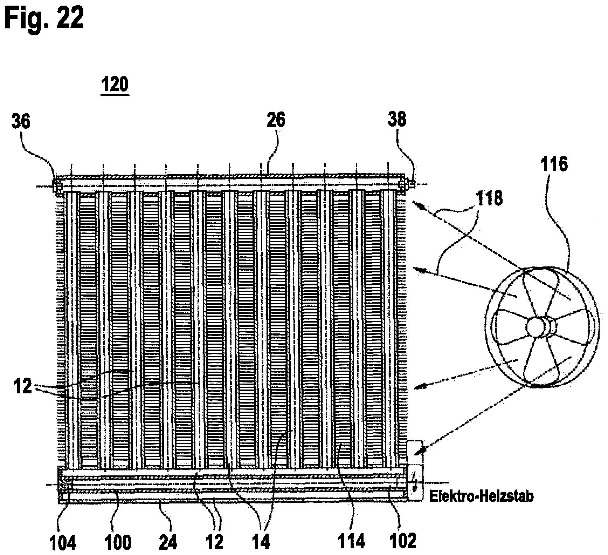

Fig. 22 zeigt eine sechste Ausführungsform eines Heizkörpers 120, der im Wesentlichen den gleichen Aufbau wie der Heizkörper 98 gemäß Fig. 16 aufweist, wobei jedoch die Wärmerohre 14 über quer verlaufende Lamellen 114 thermisch gekoppelt sind. Ferner ist ein Ventilator 116 vorgesehen, über den eine Luftströmung 118 durch die zwischen den Lamellen 114 sich bildende Öffnungen geführt werden kann.

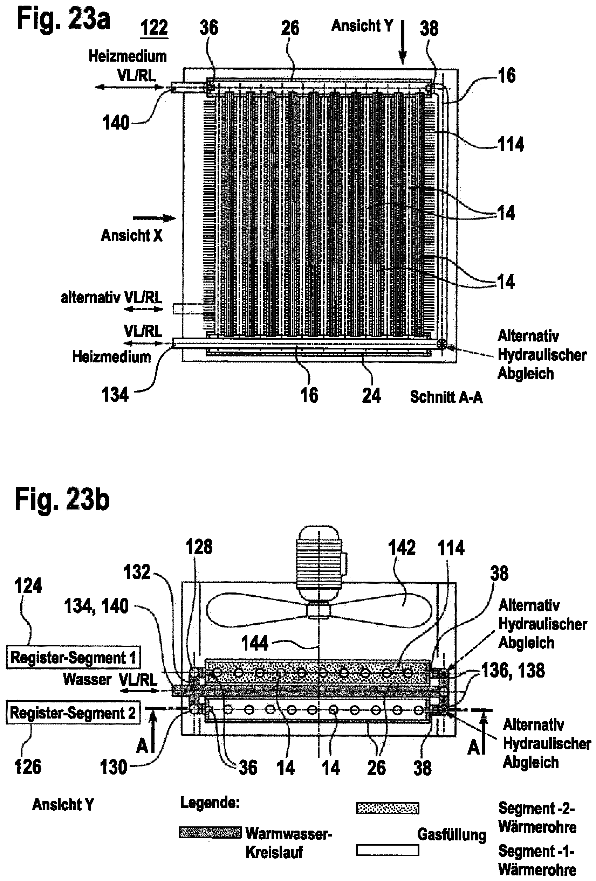

Fig. 23a bis 23c zeigen jeweils verschiedene Ansichten eines Heizregisters 122, bestehend aus zwei parallel geschalteten Heizkörpern 112_gemäß Fig. 19. Gemäß Fig. 23a umfasst das Heizregister 122 ein erstes Heizkörpersegment 124 sowie ein zweites Heizkörpersegment 126, wobei die Heizungsrohre 16 parallelgeschaltet sind. Hierzu ist vorgesehen, dass Anschlussstutzen 128, 130 über ein Verbindungselement 132 gemeinsam mit einem Vorlaufstutzen 134 verbunden sind. Ausgangsseitig sind Ausgangsstutzen 136, 138 über eine Rohrverbindung mit einem Anschlussstutzen 140 verbunden. Das Anschlusssystem wirkt auch, wenn der Anschluss 140 der Vorlauf ist und der Anschluss 134 der Rücklauf ist.

Die Heizregister-Segmente 124, 126 weisen im Wesentlichen einen Aufbau auf, der dem Aufbau des Heizkörpers 112 entspricht, wie dieser in Bezug zu den Fig. 19 bis 21 beschrieben wurde.

Ferner ist ein Ventilator 142 vorgesehen, dessen Längsachse 144 im Wesentlichen rechtwinklig zu einer von den Segmenten aufgespannten Ebene verläuft, so dass eine Luftströmung durch die Öffnung zwischen den Lamellen 114 erzeugt werden kann.

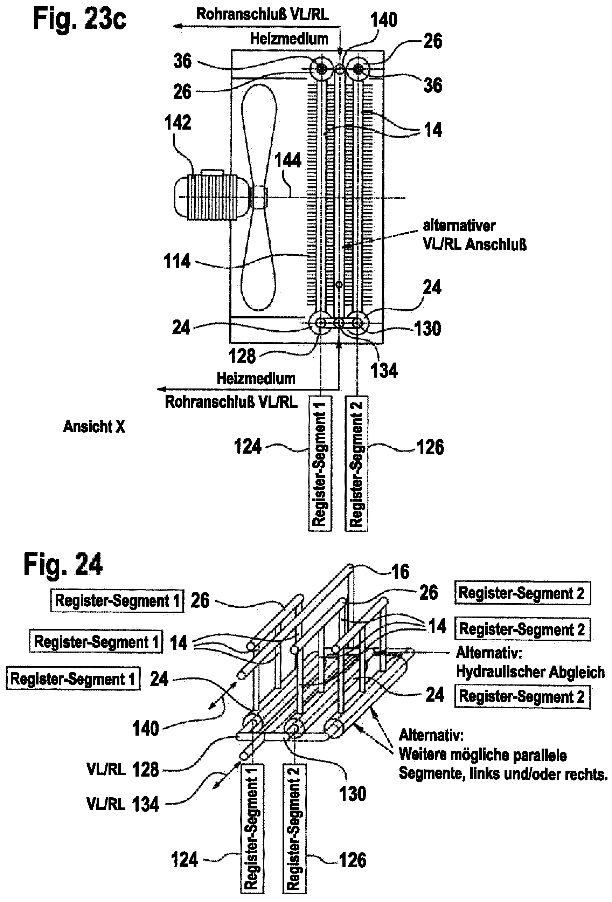

Fig. 24 zeigt rein schematisch ein Durchflussprinzip des Heizregisters 122 in vereinfachter Darstellung. Die Wärmerohre 14 der Heizregister-Segmente 124, 126 sind jeweils in Fluidverbindung mit den Querbindungsrohren 24, 26. Koaxial zu den Querverbindungsrohren 24 verlaufen die Heizungsrohre 16, welche im dargestellten Ausführungsbeispiel als Heizmedium Wasser führen. Diese sind eingangsseitig und ausgangsseitig parallel geschaltet um einen hydraulischen Abgleich zu schaffen. Alternativ können zusätzlich hydraulische Abgleich-Ventile wie dargestellt vorgesehen werden. Auch besteht die Möglichkeit, weitere Segmente parallel zu schalten, wie dies durch ein weiteres Querverbindungsrohr dargestellt ist.

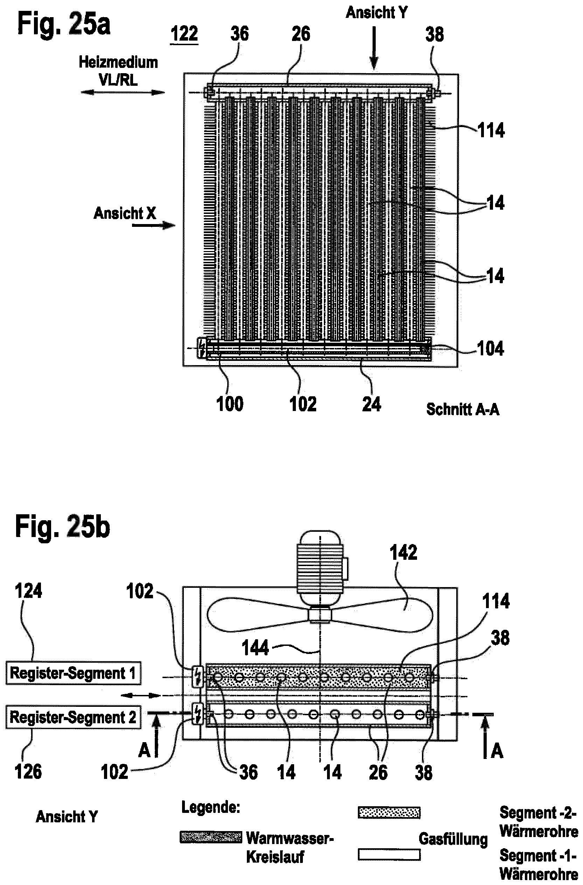

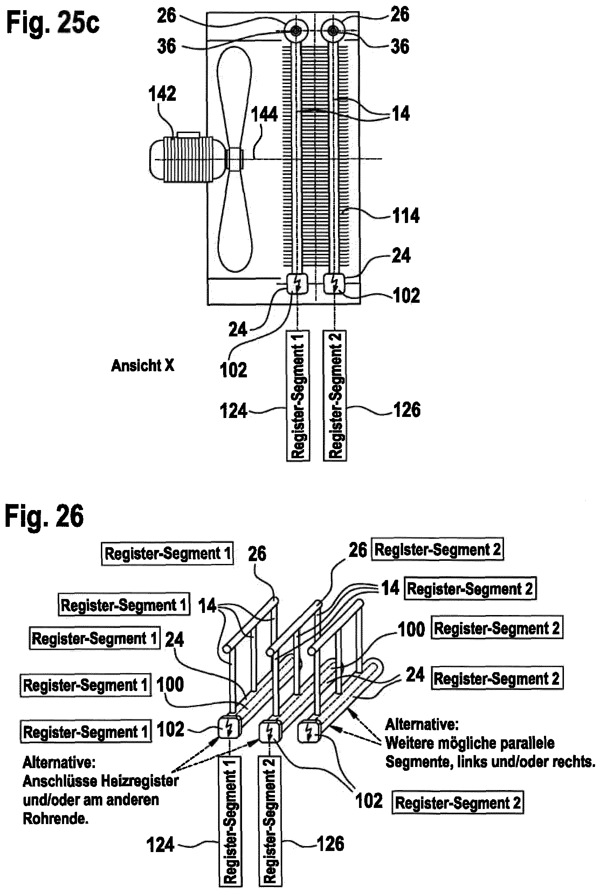

Fig. 25a bis 25c zeigt eine Ausführungsform eines Heizkörpers 122, gemäß Fig. 23 jeweils in verschiedenen Ansichten, wobei als Heizmedium elektrische Heizstäbe 102 vorgesehen sind. Das Heizregister umfasst ein erstes Heizkörpersegment 124 und ein zweites Heizkörpersegment 126.

Die Heizregister-Segmente 124, 126 weisen im Wesentlichen einen Aufbau auf, der dem des Heizkörpers 120 Fig. 22 entspricht, wie dieser in Bezug zu den Fig. 19 bis 22 beschrieben wurde.

Die Heizstab-Anschlüsse sind nicht auf die bildlich dargestellte Seite beschränkt, sie können auch an dem gegenüber liegenden Rohrenden erfolgen, mit den wie vor beschriebenen erforderlichen fluiden Abdichtungen.

Fig. 26 zeigt rein schematisch ein Durchflussprinzip des Heizregisters 122 in vereinfachter Darstellung. Die Wärmerohre 14 der Heizregister-Segmente 124, 126 sind jeweils in Fluidverbindung mit den Querbindungsrohren 24, 26. Koaxial zu den Querverbindungsrohren 24 verlaufen Rohre 100, welche im dargestellten Ausführungsbeispiel die elektrischen Heizstäbe 102 aufnehmen. Auch besteht die Möglichkeit, weitere Segmente parallel zu schalten, wie dies durch ein weiteres Querverbindungsrohr dargestellt ist.

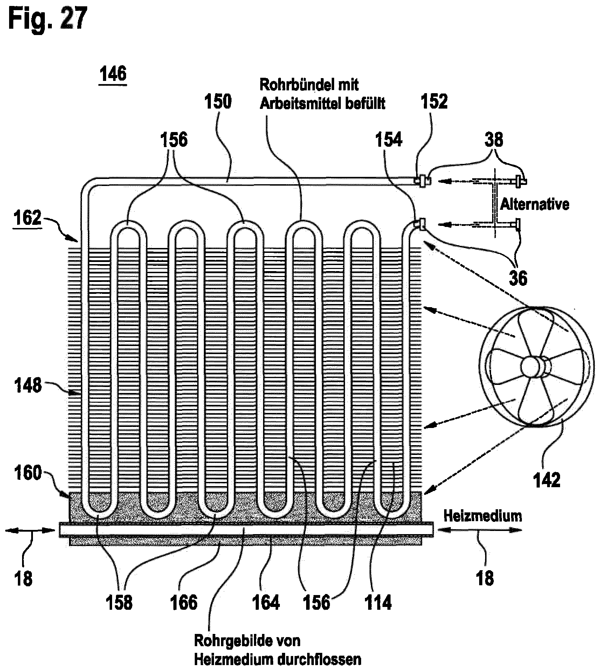

Fig. 27 zeigt eine Vorderansicht einer siebten Ausführung eines Heizkörpers 146 in Form eines mäanderförmig geformten Wärmerohr-Bündels 148, welches mit einem Arbeitsmittel 150 befüllt und an seinen Enden 152, 154 fluiddicht verschlossen ist. Parallel verlaufende Rohrabschnitte 156 des Rohrbündels 148 bilden Wärmerohre, während erste bogenförmige Rohrabschnitte 158 einen Verdampfer 160 und zweite bogenförmige Rohrabschnitte 156 einen Kondensator 162 bilden.

Die Rohrabschnitte 158, die als Verdampfer wirken, sind thermisch mit einer Wärmequelle 164 wie Heizungsrohr gekoppelt. Im vorliegenden Fall verläuft das Heizungsrohr 164 in einem Wärmeleit-Korpus 166, welcher aus einem Wärmeübertragungsmedium wie Aluminium oder Kupfer oder vorteilhaften wärmeleitfähigem Material ausgebildet ist. Das Heizungsrohr 164 wird von dem Heizmedium 18 wie Wasser durchflossen, um Wärme an die Rohrabschnitte 158 zu übertragen.

Am Ende des Rohrabschnitt 152 ist vorzugsweise ein Sicherheitsventil 38 und am Ende des Rohrbündels 154 ein Befüllventil 36 angeordnet. Konstruktiv ist auch jede andere vorteilhafte Lage des Sicherheitsventils 38 und Befüllventils 36 oder den vom Arbeitsmittel befüllten Holräumen möglich. Wenn technische Richtlinien es erfordern, ist eine vorteilhafte Sicherheitskapselung des Ventils 38 vorgesehen.

Alternativ können die Enden 152 vor dem Sicherheitsventil 38, und die Enden 154 vor dem Befüllventil 36 auch durch ein Rohrstück miteinander verbunden werden, so dass ein geschlossenes Rohrgebilde entsteht. Dadurch kann die Wirkverteilung des Arbeitsmittels innerhalb des von dem Rohrbündel eingespannten Hohlraums verbessert werden.

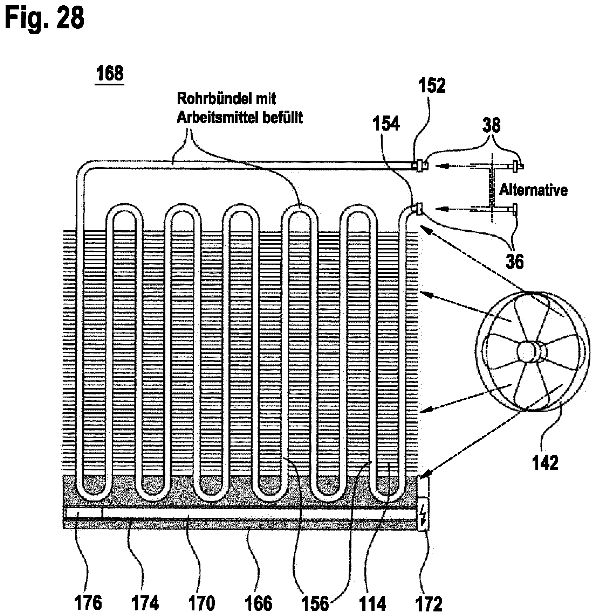

Fig. 28 zeigt eine weitere Ausführungsform eines Heizkörpers 168, gemäß Fig.27 wobei die Wärmequelle als elektrischer Heizstab 170 mit Anschluss 172 ausgebildet ist. Der Elektro-Heizstab 170 erstreckt sich in einer Öffnung 174 in dem Wärmeleit-Korpus 166. Zur besseren Wärmeübertragung ist der Übergang zwischen dem Elektro-Heizstab 170 und dem Wärmleit-Korpus 166 ein Wärmeleitmittel 176 vorgesehen.

Der Heizstab-Anschluss ist nicht auf die bildlich dargestellte Seite beschränkt, er kann auch an dem gegenüber liegenden Rohrende erfolgen, mit den wie vor beschriebenen erforderlichen fluiden Abdichtungen.

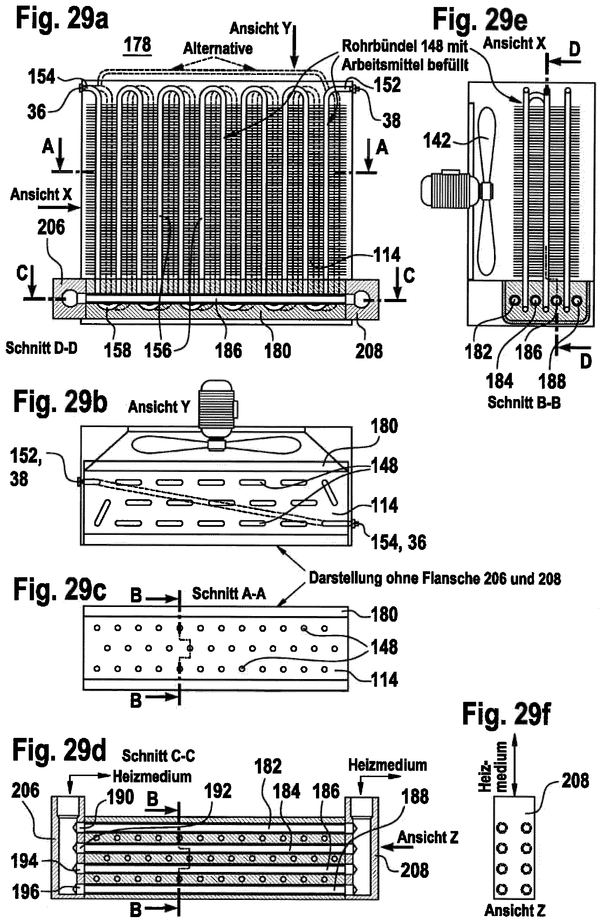

Die Fig. 29a bis f zeigen in verschiedenen Ansichten eine Ausführungsform eines Heizkörpers 178 auf der Basis des Heizkörpers 146 gemäß Fig. 27. Fig. 29 a) zeigt eine Vorderansicht in Schnittdarstellung. Die Fig. 29 b) zeigt eine Draufsicht des Heizkörpers 178. Fig. 29 c) zeigt eine Draufsicht in Schnittdarstellung entlang Schnitt A-A der Fig. 29 a). Fig. 29 d) zeigt eine Draufsicht in Schnittdarstellung entlang Schnitt C-C der Fig. 29 a). Fig. 29 e) zeigt eine Seitenansicht in Schnittdarstellung entlang Schnitt B-B der Fig. 29 c, d) und Fig. 29 f) zeigt eine Seitenansicht von rechts eines Anschlussflansches.

Fig. 29 a) zeigt eine Vorderansicht des Heizkörpers 178. Die gebogenen Rohrabschnitte 158 sind in einem gemeinsamen Wärmeleit-Korpus 180 thermisch gekoppelt. Parallel zu den gebogenen Rohrabschnitten 158 verlaufen Heizungsrohre 182, 184, 186, 188, wie dies in der Seitenansicht gem. Fig. 29 e) dargestellt ist.

Die Heizungsrohre weisen an einem Ende Anschlussstücke 190, 192, 194, 196 bzw. am anderen Ende 198, 200, 202 ,204 auf, die jeweils vorteilhaft in einem gemeinsamen Flansch 206, 208 münden. Die Heizungsrohre sind parallel geschaltet. Die Anschlüsse, Vorlauf/Rücklauf sind unabhängig der Fließrichtung des Heizmedium.

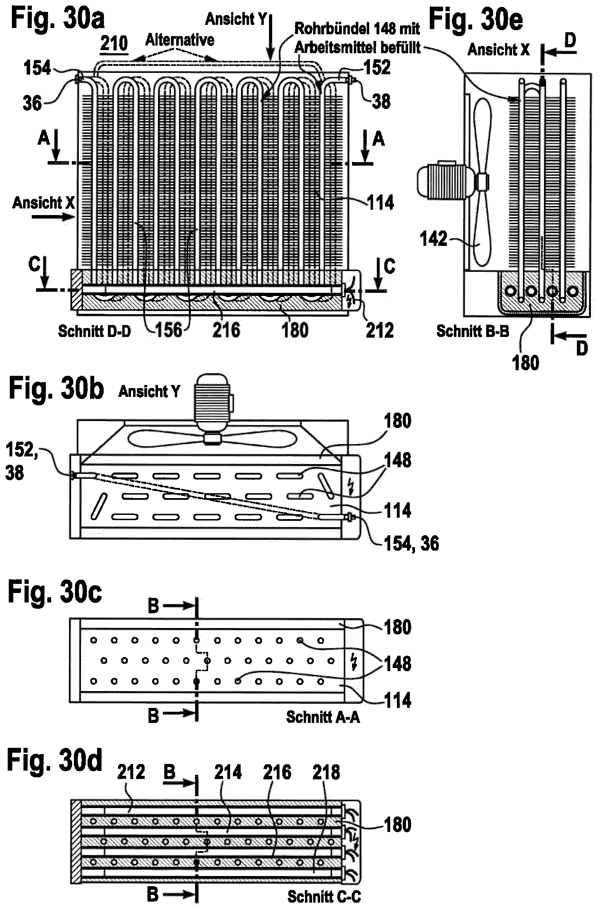

Die Fig. 30 a) bis e) zeigen Ansichten einer Ausführungsform eines Heizkörpers 210, der im Wesentlichen dem Heizkörper 178 gemäß Fig. 29 a) bis e) entspricht, mit dem Unterschied, dass anstelle der mit dem Heizmedium Wasser durchflossenen Rohrleitungen 182, 184, 186, 188 Elektro-Heizstäbe 212, 214, 216, 218 als Wärmequelle verwendet werden.

Die Heizstab-Anschlüsse sind nicht auf die bildlich dargestellte Seite beschränkt, sie können auch an dem gegenüber liegenden Rohrenden erfolgen, mit den wie vor beschriebenen erforderlichen fluiden Abdichtungen.

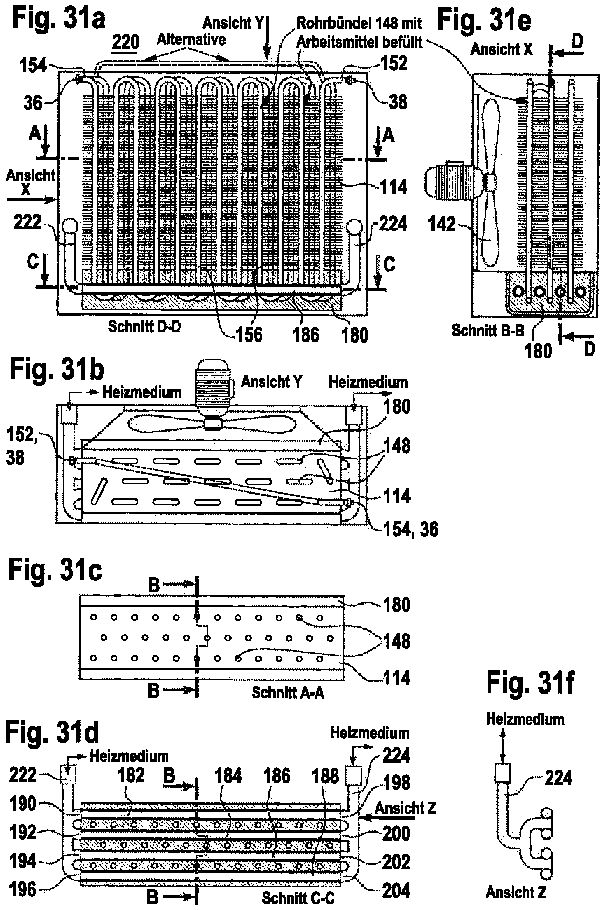

Die Fig. 31 a) bis f) zeigen Ansichten einer Ausführungsform eines Heizkörpers 220, der im Wesentlichen dem Heizkörper 178 gemäß Fig. 29 a) bis e) entspricht, mit dem Unterschied, das die Enden 190, 192, 194, 196; 198, 200, 202, 204 der Heizrohre 182, 184, 186, 188 nicht in den gemeinsamen Flansch 206, 208 sondern jeweils zwei Enden 190, 192; 194, 196 bzw. 198, 200; 202, 204 in einen separaten Rohrflansch 222, 224 münden. Die Heizungsrohre sind parallel geschaltet. Die Anschlüsse, Vorlauf/Rücklauf sind unabhängig der Fließrichtung des Heizmedium.

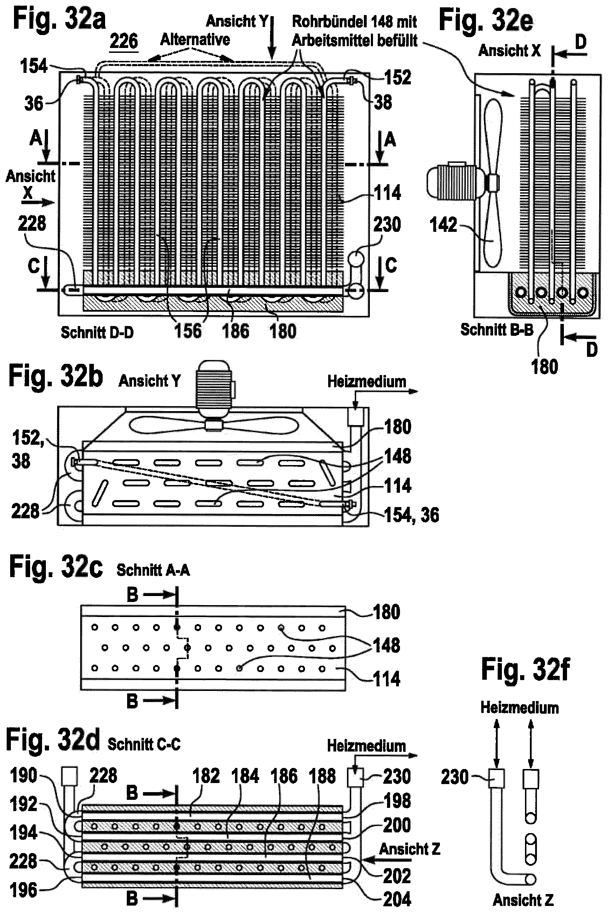

Die Fig. 32 a) bis f) zeigen Ansichten einer Ausführungsform eines Heizkörpers 226, der im Wesentlichen dem Heizkörper 178 gemäß Fig. 29 a) bis e) entspricht, mit dem Unterschied, dass die Enden 190, 192, 194, 196; 198, 200, 202, 204 der Heizrohre 182, 184, 186, 188 nicht in den gemeinsamen Flansch 206, 208 enden, sondern mittels Anschlussverbindungen 228, 230 in Reihe geschaltet sind.

Der Flansch-Anschluss 230 ist nicht auf die bildlich dargestellte Seite beschränkt, er kann auch an den gegenüber liegenden Rohrende erfolgen. Die Anschlüsse, Vorlauf/Rücklauf sind unabhängig der Fließrichtung des Heizmedium.

## Patentansprüche

1. Heizkörper (146, 168, 178, 210, 220), umfassend zumindest ein mit einem Arbeitsmittel (150) gefülltes Wärmerohr (148) mit einem ersten und einem zweiten Ende (152, 154) sowie eine Wärmequelle (164), die thermisch mit dem Wärmerohr (148) gekoppelt ist,
**dadurch gekennzeichnet,**
**dass** das Wärmerohr (148) zu einem mäanderförmigen Rohrbündel (148) gebogen ist, umfassend gerade, parallel verlaufende Abschnitte (156) und die parallelen Abschnitte verbindende obere und untere gebogene Abschnitte (158), wobei die unteren oder oberen gebogenen Abschnitte (158) des Rohrbündels (148) thermisch mit der Wärmequelle (164) gekoppelt sind.

2. Heizkörper nach Anspruch 1,
**dadurch gekennzeichnet,**
**dass** die Enden (152, 154) des Rohrbündels (148) fluiddicht mit Ventilen (36, 38) abgedichtet oder miteinander verbunden sind.

3. Heizkörper nach Anspruche 1 oder 2
**dadurch gekennzeichnet,**
**dass** die unteren bogenförmigen Abschnitte (158) des Rohrbündels (148) jeweils einen Verdampfer bilden und thermisch mit einem Wärmeleit-Korpus (166) gekoppelt sind, wobei der Wärmeleit-Korpus (166) mit der Wärmequelle (164) thermisch gekoppelt ist.

4. Heizkörper nach zumindest einem der vorhergehenden Ansprüche,
**dadurch gekennzeichnet,**
**dass** der Wärmeleit-Korpus (166) aus einem wärmeleitenden Material wie Kupfer oder Aluminium ausgebildet ist oder einem vorteilhaften wärmeleitenden Material im geeigneten Aggregatzustand.

5. Heizkörper nach zumindest einem der vorhergehenden Ansprüche,
**dadurch gekennzeichnet,**
**dass** das Rohrbündel (148) ein Gravitationswärmerohr-Bündel ist.

6. Heizkörper nach zumindest einem der vorhergehenden Ansprüche,
**dadurch gekennzeichnet,**
**dass** die Wärmequelle (164) zumindest ein den Wärmeleit-Korpus (166) durchsetzendes und von einem Heizmedium wie Wasser durchflossenes Heizungsrohr (164) ist.

7. Heizkörper nach zumindest einem der vorhergehenden Ansprüche,
**dadurch gekennzeichnet,**
**dass** die Wärmequelle (164) eine elektrische Wärmequelle, vorzugsweise ein elektrischer Heizstab (170) ist, der thermisch mit dem Wärmeleit-Korpus (166) gekoppelt ist.

8. Heizkörper nach zumindest einem der vorhergehenden Ansprüche,
**dadurch gekennzeichnet,**
**dass** die vertikalen Anschnitte (156) des Rohrbündels Wärmeleitlamellen (144) aufweisen.

9. Heizkörper nach zumindest einem der vorhergehenden Ansprüche,
**dadurch gekennzeichnet,**
**dass** die Rohrbündel (148) parallel oder in reihe zu einem Heizregister (178; 210; 220) verschaltet sind, wobei die unteren gebogenen Abschnitte (158) in einem gemeinsamen Wärmeleit-Korpus (180) aufgenommen sind.

10. Heizkörper nach zumindest einem der vorhergehenden Ansprüche,
**dadurch gekennzeichnet,**
**dass** als Wärmequelle (164) auch andere Medien flüssig oder gasförmig wirksam sind.

11. Heizkörper nach zumindest einem der vorhergehenden Ansprüche,
**dadurch gekennzeichnet,**
**dass** Temperaturen außerhalb des Temperaturbereichs von Wasser möglich sind, wobei das Arbeitsmittel (12) in den Wärmerohren (14; 148) den Temperaturbereich des Heizkörpers bestimmt.

12. Heizkörper nach zumindest einem der vorhergehenden Ansprüche,
**dadurch gekennzeichnet,**
**dass** das Arbeitsmittel (12) in den Wärmerohren (14; 148) den Temperaturbereich des Heizkörpers bestimmt.

13. Heizkörper nach zumindest einem der vorhergehenden Ansprüche,
**dadurch gekennzeichnet,**
**dass** das Arbeitsmittel (12) in den Wärmerohren (14; 148) die Wärmeleistung des Heizkörpers bestimmt.
